# EUROPÄISCHE PATENTANMELDUNG

(11) **EP 1 343 301 A1**
(43) Veröffentlichungstag der Anmeldung: **10.09.2003**
(21) Anmeldenummer: 03011377.3
(22) Anmeldetag: 17.09.1996
(51) Int. Cl.: H04M 1/737

(54) **Fernmeldegerät**

(30) Priorität: 29.09.1995 DE 19536476
(62) Teilanmeldung aus: 96114912.7
(71) Anmelder: SIEMENS AKTIENGESELLSCHAFT, 80333 München (DE)
(72) Erfinder: Hofmann, Jürgen, 85304 Ilmmünster (DE)

(57) **Zusammenfassung**

Die Erfindung betrifft ein Fernmeldegerät. Dieses weist eine Einrichtung zum Senden und zum Empfang von Infrarot-Signalisierungsdatensignalen zu und von einer peripheren Einrichtung auf. Zusätzlich zu den Infrarot-Signalisierungsdatensignalen sendet und empfängt die Einrichtung auch Infrarot-Nutzdatensignale.

Weiterhin weist das Fernmeldegerät eine Einrichtung zur Bestimmung der aktuellen Helligkeit auf, welche helligkeitsbezeichnende Signale erzeugt, und/oder eine Einrichtung zur Bestimmung des Abstandes der Einrichtung zu einem Gegenstand, die abstandsbezeichnende Signale erzeugt.

## Beschreibung

Die Erfindung betrifft ein Fernmeldegerät nach dem Oberbegriff des Anspruchs 1.

Es sind bereits Fernmeldegeräte, insbesondere tragbare Fernsprechgeräte, bekannt, welche eine Kommunikation mit einer peripheren Einrichtung (Zubehörgeräte) ermöglichen.

Dabei sind das jeweilige Fernmeldegerät und das periphere Gerät durch eine mechanische Schnittstelle miteinander verbunden.

Ausgehend von diesem Stand der Technik liegt der Erfindung die Aufgabe zugrunde, ein Fernmeldegerät der eingangs genannten Art anzugeben, das erweiterte Funktionen ermöglicht.

Diese Aufgabe wird erfindungsgemäß durch ein Fernmeldegerät gelöst, das in den Ansprüchen definiert ist.

Die Erfindung ist mit einer Mehrzahl von Vorteilen verbunden. Das erfindungsgemäße Fernmeldegerät weist eine Infrarot-Schnittstelle für eine Kommunikation mit einem peripheren Gerät auf, wobei sowohl Signalisierungsdatensignale als auch Nutzdatensignale zwischen Fernmeldegerät und peripherer Einrichtung übertragbar sind.

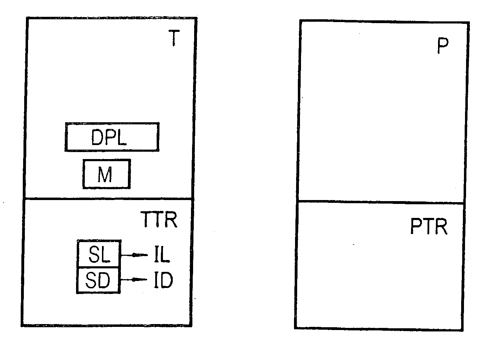

Die Erfindung wird nun anhand der Zeichnung beschrieben.

Ein Fernmeldegerät T, beispielsweise ein drahtgebundenes oder ein mobiles Fernsprechendgerät, das in der Figur schematisch dargestellt ist, weist eine Einrichtung TTR zum Senden und zum Empfang von Infrarot-Signalisierungsdatensignalen und/oder Infrarot-Nutzdatensignalen auf. Die Einrichtung TTR hat damit eine doppelte Funktion, nämlich die Übertragung sowohl von Signalisierungsdatensignalen als auch von Nutzdatensignalen. Das erfindungsgemäße Gerät ist damit in der Lage, Signalisierungsdatensignale und Nutzdatensignale zu einer peripheren Einrichtung P zu übertragen. Beispiele für derartige periphere Einrichtungen sind z.B. eine Freisprechanlage zwischen Fernmeldeendgerät, Mikrophon und Lautsprecher, ein Personal Computer, ein Fernsprech-Handapparat, ein Anrufbeantworter sowie eine Datenverarbeitungseinrichtung, insbesondere ein sogenannter Laptop.

Damit wird erfindungsgemäß ermöglicht, Sprache in die periphere Einrichtung P (Mikrophon einer Freisprechanlage) einzugeben und die Sprachsignale mittels Infrarot-Signalen zu dem zugehörigen Fernmeldeendgerät zu übertragen. In entsprechender Weise werden Sprachsignale mittels Infrarot-Signalen zwischen Fernmeldeendgerät und Lautsprecher übertragen.

Auf diese Weise können auch Fernsprechnachrichten in einem Anrufbeantworter abgespeichert werden, der räumlich von dem Fernsprechendgerät entfernt ist. Erfindungsgemäß werden also Nutzdatensignale (z.B. Sprach- oder Faxnachrichtensignale) und Signalisierungsdaten, z.B. zur Betätigung eines Anrufbeantworters (u.a. Ein- und Abschalten, Abfrageprozeduren) zwischen einem Fernmeldegerät T und einer peripheren Einrichtung P in Form von Infrarot-Signalen übertragen.

Weiterhin weist das beschriebene Fernmeldeendgerät eine Einrichtung SL zur Bestimmung der aktuellen Helligkeit auf (Helligkeit, die das Fernmeldegerät jeweils umgibt). Diese Einrichtung SL erzeugt helligkeitsbezeichnende Signale IL. Eine optische Anzeigeeinrichtung DPL (z.B. Display, Leuchtdiode, etc.) des Fernmeldegerätes wird durch diese helligkeitsbezeichnende Signale IL gesteuert. Damit lässt sich die Helligkeit der optischen Anzeigeeinrichtung der jeweiligen Umgebungshelligkeit anpassen.

## Patentansprüche

1. Fernmeldegerät (T),
**dadurch gekennzeichnet,**
**dass** es eine Einrichtung (TTR) zum Senden und zum Empfang von Infrarot-Signalisierungsdatensignalen zu und von einer peripheren Einrichtung (P) aufweist; und dass die Einrichtung (TTR) zusätzlich zu den Infrarot-Signalisierungsdatensignalen auch Infrarot-Nutzdatensignale sendet und empfängt.

2. Fernmeldegerät nach einem der Ansprüche 1 bis 3 oder 7,
**dadurch gekennzeichnet,**
**dass** das Fernmeldegerät tragbar ist.
